# EUROPEAN PATENT SPECIFICATION

(11) **EP 0 511 321 B1**
(45) Date of publication and mention of the grant of the patent: **17.07.1996**
(21) Application number: 91905579.8
(22) Date of filing: 21.12.1990
(51) Int. Cl.: F16L 37/084

(54) **SNAP AND LOCK QUICK CONNECTOR**
SCHNELLVERRIEGELUNGSVERBINDUNG DURCH EINRASTMECHANISMUS
RACCORD RAPIDE A VERROUILLAGE PAR ENCLIQUETAGE

(30) Priority: 16.01.1990 US 465773; 07.12.1990 US 623763
(43) Date of publication of application: 04.11.1992
(73) Proprietor: PROPRIETARY TECHNOLOGY, INC., Southfield, MI 48037 (US)
(72) Inventor: BARTHOLOMEW, Donald D., Mt. Clemens, MI 48045 (US)
(74) Representative: Neumann, Ernst Dieter, Dipl.-Ing.
(86) International application number: US9007611
(87) International publication number: WO9111651

(56) References cited:
- US-A- 0 922 132
- US-A- 0 938 731
- US-A- 2 046 840
- US-A- 3 553 817
- US-A- 3 826 523
- US-A- 4 016 696
- US-A- 4 228 723
- US-A- 4 330 917
- US-A- 4 423 892
- US-A- 4 501 054
- US-A- 4 681 350
- US-A- 4 681 351
- US-A- 4 753 458
- US-A- 4 846 506

## Description

### Background and Summary of the Invention

The present invention relates to a connector assembly for providing a snap and lock quick connection.

In the automotive industry, as well as for many other industries, the need always exists for low cost, reliable, and easy to assemble components. This need is especially apparent with respect to providing a connection between fluid carrying conduits, such as fuel or refrigerant lines. In older threaded connectors, substantial assembly time could be accumulated in screwing on a cap to a fitting and tightening the cap down to the proper torque needed to provide for a fluid tight seal. Further, an inventory would have to be maintained to keep track of the number of caps and fittings, and any liners or other components that may be necessary. Also, retightening of the caps may be required to maintain the seal after the automobile or other system has been put in use.

A connector assembly for use in securing a conduit having a radially outwardly extending locking surface at a predetermined distance from an end of said conduit is known from US-A-4 846 506. This assembly comprises a housing having an axial bore formed therein for receiving said conduit, sealing means for sealing said conduit with said housing, said sealing means positioned in said axial bore of said housing and a single retainer for retaining said conduit in said housing, said retainer positioned in said housing axial bore and including a ring for maintaining said sealing means in said housing, said ring including an axial bore enabling a passage of said conduit, a pair of arms extending from said ring, said arms in longitudinal section having a overall V-shape with one end of said arms coupled with said ring and the other end of said arms abutting directly to said locking surface of said conduit with their free edge and with the angled tip of said V of said arms directly abutting said housing for retaining said conduit in said housing.

Another connector assembly for use in securing a conduit having a radially outwardly extending locking surface at a predetermined distance from an end of said conduit is known from US-A-4 681 351. This assembly as well comprises a housing having an axial bore formed therein for receiving said conduit, sealing means for sealing said conduit in respect to said housing, said sealing means positioned in said axial bore of said housing and a single retainer for retaining said conduit in said housing, said retainer positioned in said housing axial bore and including a ring for maintaining said sealing means in said housing, said ring including an axial bore enabling a passage of said conduit, a pair of arms extending from said ring, said arms in longitudinal section having a overall V-shape with one end of said arms coupled with said ring and the other end of said arms, being connected to abutment elements, abutting directly to said locking surface of said conduit with their free edge and with the angled tip of said V of said arms directly abutting said housing for retaining said conduit in said housing.

In both the above prior art embodiments with the free ends of said V-shaped arms being directed inwardly, it is difficult to assemble and to disassemble the connector assembly. The sharp edges of said arms abutting the conduit locking surface and the housing tend to cause damages on the conduit and on the housing.

Accordingly, it is the primary object of the present invention to provide an improved connector assembly for providing a snap and lock quick connection between fluid conveying conduits.

This object is achieved with the combination of features according to claim 1.

With the present invention, it is provided a connector assembly comprising an improved retainer assembly which operates to both secure the conduit in the axial bore of the housing and position the sealing element within the axial bore of the housing, and which uses a retaining insert to secure the retaining element inside the housing.

An embodiment of the present invention provides a connector assembly comprising a pre-assembled connector housing and retainer assembly so that a snapping connection may be made to a tubular fluid conveying conduit.

Another embodiment of the present invention provides a connector assembly comprising a pre-assembled connector conduit unit which requires only a one-step snapping connection to be joined to a connector housing.

A further embodiment of the present invention provides a connector assembly comprising a seal retainer which prevents the high pressure blowout of the O-rings and bushings used to form the fluid tight seal.

Additional advantages of the present invention will become apparent from a reading of the detailed description of two preferred embodiments which makes reference to the following set of drawings.

### Brief Description Of The Drawings

Fig. 1 is a side elevation view, partially in cross-section of a primary retaining member and seal retainer inserted into a housing structure;
Fig. 2 is a side elevation view, partially in cross-section of a seal retainer inserted into a housing;
Fig. 3. is a perspective view of a primary retaining member of a connector assembly in accordance with the present invention;
Fig. 4. is a perspective view of a seal retainer;
Fig. 5 is a side elevation view of a retaining insert;
   and
Fig. 6 is a top view of a retaining member portion responsible for securing a retaining insert.
Fig. 7 is an elevation view of a connector assembly in accordance with the present invention.
Fig. 8 is a sectional view through line 8-8 of Figure 7.
Fig. 9 is a perspective view of a retainer of a connector assembly in accordance with the present invention.
Fig. 10 is an exploded elevation view partially in section like that of Figure 8.
Fig. 11 is an exploded perspective view partially in section of the assembly of Figure 8.
Fig. 12 is a perspective view of a retainer assembly and fitting for inserting a retainer and sealing means into a conduit housing.
Fig. 13 is a perspective view of another embodiment of a retainer of a connector assembly in accordance with the present invention.
Fig. 14 is a sectional view along line 14-14 of Figure 13.

### Detailed Description Of The Preferred Embodiments

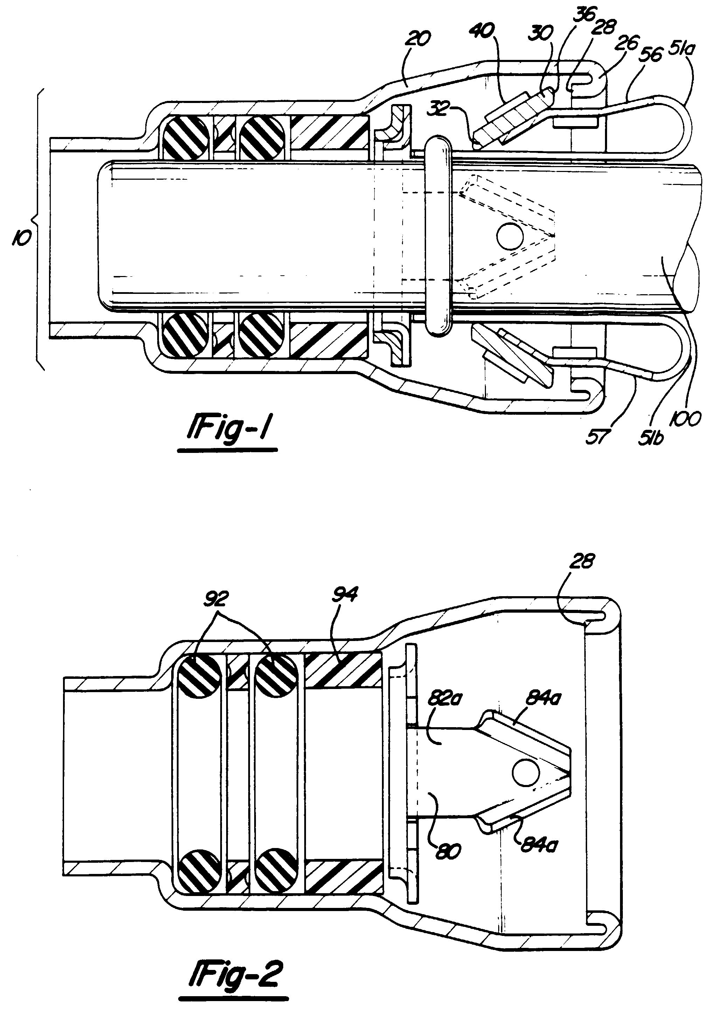

Referring to Fig. 1, a side elevation view, partially in cross-section of connector assembly 10, according to the present invention, is shown. The connector assembly 10 is generally comprised of a housing 20, a retaining insert 30, a primary retaining member 50, and a seal retainer 80. The retaining insert is adapted to provide a rounded edge 32 for pivoting on configuration arms 54(a-d) when depressible surface areas 56 and 57 are sufficiently pinched together. Housing 20 is shown to be formed with an axial bore 22 through which conduit 100 passes through. Housing 20 also includes a radially disposed surface 26, which is incurved so as to provide a surface 28 which prevents removal of the primary retaining member 50 by contacting with the abutting retaining insert surface 36 when the connector assembly 10 is forced away from the housing structure 20. The housings radially disposed surface 26 also serves to provide an abutting surface to prevent the undesired removal of the seal retainer 80.

In the preferred embodiment, the snap and lock connection of connector assembly 10 is accomplished when primary retaining member 50 is inserted into the housing structure 20, as shown. As the insertion of the primary retaining member occurs, once the abutting retaining surface 36 clears, the most distal part of the radially disposed surface 26 pivoting occurs at rounded edge 32 of retaining insert 30 and the abutting surface 36 moves into a position of abutment and can no longer clear the radially disposed surface 26 as the primary retaining member 50 is pulled away from the housing 20. This occurs because the configuration arms 54(a-d) are made of a resilient material such as metal or plastic which causes the configuration arms to return to their unflexed position. The only way to disconnect the primary retaining member 50 from the housing 20 is to apply pressure to surface areas 56 and 57 by pinching them together. As surface areas 56 and 57 are pinched together, flexion occurs at joints 62(a-d) and pivoting by the retaining insert 30, occurs on configuration arms 54 at rounded edge 32 of retaining insert 30 effectuating adequate clearance between the retaining insert 30 and the radially disposed surface 26 so that by simultaneously depressing surface areas 56 and 57 and pulling retainer element 50 away from housing 20, disconnection will result.

Referring to Fig. 2, a side elevation view, partially in cross-section of a preferred embodiment of the seal retainer 80 inserted into the housing 20 for a connector assembly, according to the present invention, is shown. As the insertion of the seal retainer 80 occurs, once the arm portions 82 clear the housings radially disposed surface 26, the seal retainer 80 is locked in and prevents the high pressure blowout of the O-rings 92 and bushings 94.

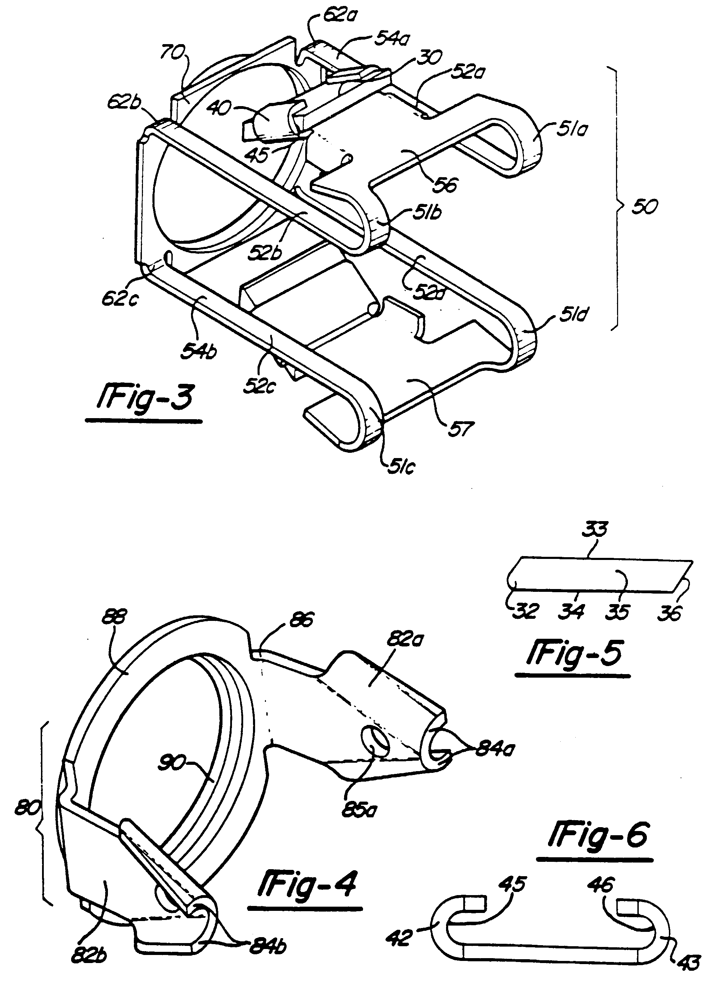

Referring to Fig. 3, a perspective view of a preferred embodiment of the primary retainer member 50 for a connector assembly, according to the present invention, is shown. The primary retainer member is generally comprised of a retaining insert 30, a portion which envelops the retaining insert 40, depressible surface areas 56 and 57, curved portions 51(a-d) and straight portions 52(a-d) of configuration arms 54(a-d) and a collar 70. The configuration arms 54(a-d) project outwardly from the collar 70. At the point of this outward projection are joints 62(a-d), which allow for flexion as pressure is applied to surface areas 56 and 57. The configuration arms 54(a-d) provide a surface upon which the retaining insert 30 is able to pivot as pressure is applied to surface areas 56 and 57. When pressure is applied to the surface areas, the curved portions 51(a-d) of configuration arms 54(a-d) also allow for a small amount of flexion thereby relieving some of the pressure concentrated at joints 62(a-d).

The entire primary retaining member 50 must be made of a sufficiently non-deformable material such as plastic or metal to allow flexion and a return to an unflexed position.

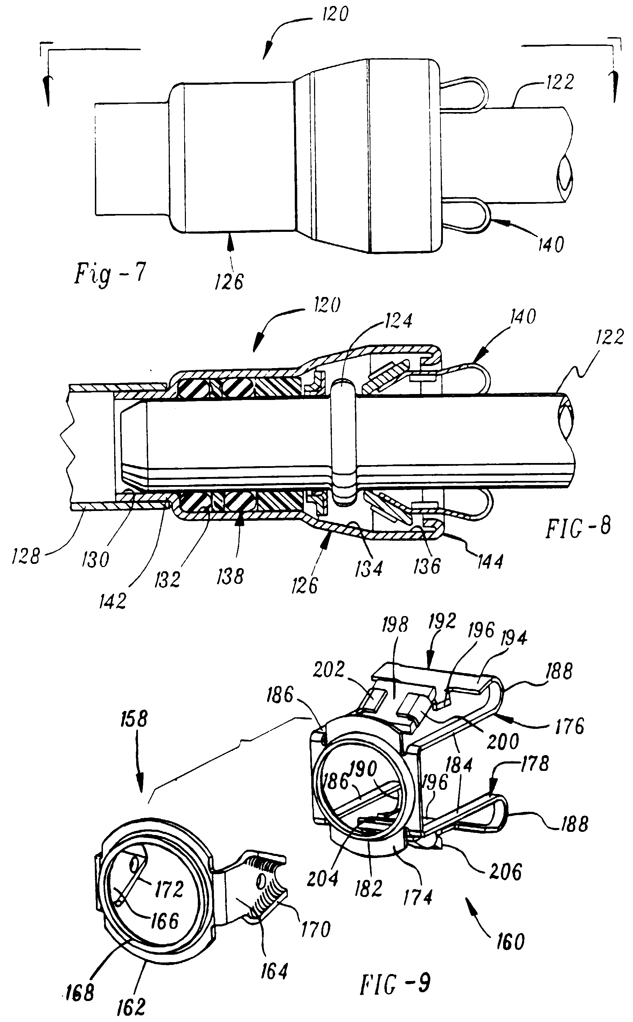

Referring to Figs. 3 and 5, retaining insert 30 is shown. Retaining insert 30 may have any suitable shape for cooperating with the portion enveloping the retaining insert 40 and for a connector assembly in accordance with the present invention, is of a generally parallelogram shape in a preferred embodiment. The base edge 32 of the retaining insert is rounded to allow pivoting on the configuration arms 54(a-d) when sufficient pressure is applied to the surface areas 56 and 57 to bring the retaining insert into contact with the configuration arms. For a connector assembly in accordance with the present invention, in a preferred embodiment the retaining insert is disposed of an abutting surfach 36 which is so angled to come into relatively flat contact with the surface 28 of a housing flange portion, as the primary retaining element 50 is pulled away from the housing. The size of the retaining insert 30 is long enough, from its rounded edge 32 to is opposing distal surface 36, to fit closely between the configuration arms 54(a-d) and the housing structure 20 when being retained by the portion responsible for securing the retaining insert 40, at the same time, is short enough to be able to clear the radially disposed surface 26 when disconnection is desired. The size of the insert also depends on the angle of the configuration arm portion 53 which incorporates the portion responsible for securing the retaining insert 40. The retaining insert 30 should be made of a sufficiently non-deformable material such as plastic or metal.

Referring to Figs. 3 and 6, the retaining member portion 40 responsible for securing the retaining insert is shown. The retaining member portion may be of any sufficient design so as to secure a retaining insert. The retaining member should also be made of a relatively non-deformable material such as plastic or metal.

In a preferred embodiment, the retaining member portion 40 has C-shaped end portions 42 and 43 which engulf portions of the top 33, bottom 34 and side 35 surfaces of the retaining insert. The retaining member portion is disposed of inner surface recesses 45 and 46 into which the end portions of the retaining insert securely fit so as to prevent any movement of the insert. In other designs of elements of a connector assembly in accordance with the present invention, the retaining member may be designed so as to prevent only lateral movement of the retaining insert, thus allowing some up and down movement. Such an embodiment may be employed where the length of the configuration arms 54(a-d) and the housing 20 are considerably shorter.

Referring to Fig. 4, a perspective view of a seal retainer 80 for a connector assembly, according to the present invention, is shown. The seal retainer 82 is generally comprised of arm portions 82(a-b) which have outwardly curved flange portions 84(a-b) which serve to abut the radially disposed surface of the housing. The arm portions 82(a-b) contain bore portions 85(a-b) into which a tool inserts so that the seal retainer can be removed when desired. The arm portions flex at a joint 86 when the seal retainer is being extracted from the housing. The joint 86 is connected to a collar member 88 is provided with an outwardly extending annular lip 90 which serves to fit tightly into a bushing which further serves to provide a fluid tight seal in combination with a number of plastic or rubber-like O-rings.

Turning to the Figures, particularly Figures 7 and 8, a connector assembly is illustrated and designated with the reference numeral 120. The connector assembly includes a conduit 122 having an outward extending radial annular flange 124, positioned at a predetermined distance from the end of the conduit 122, a female housing 126 to receive the male conduit 122, and a conduit 128 coupled with the female housing 126.

Turning to Figure 8, the female housing 126 is illustrated in section. The housing 126 includes an axial bore 130 passing through the housing 126. The axial bore 130 includes increased diameter portions 132, 134 and 136. The increased diameter portions 132, 134 and 136 provide housing of the sealing means 138 and the retainer mechanism 140. Also, the housing 126 includes, at one of its ends, a stem 142 which inserts into the conduit 128 and, at the other end, a radially inward turn flange 144 which coacts with the retainer mechanism 140 to retain the conduit 122 within the female housing 126.

The sealing means 138 generally includes a pair of elastomeric O-rings 150 and 152 separated by a washer 154. The O-rings 150 and 152 and washer 159 are retained in the increased diameter bore portion 132 by a bushing 156. The O-rings 150 and 152 seal the tip of the conduit 122 within the housing 126.

The retaining mechanism 140 includes a pair of retainer members 158 and 160. Retaining member 158 includes an annular ring portion 162 and a pair of extending arms 164 and 166. The ring 162 is generally flat and planar having a radially extending flange 168 extending from one side of the ring 162 which abuts the bushing 156 to maintain the bushing 156 in position in increased axial bore portion 132. The arms 164 and 166 extend from the other side of the ring 162 and have outward turned flanges 170 and 172 at their free extending ends. The flanges 170 and 172 angularly extend from the substantially planar arms 164 and 166 to contact with the flange 144 to maintain the retaining member 158 within the housing 126. Thus, retainer 158 is maintained in position within housing 126 which, in turn, maintains sealing means 138 within the housing 126.

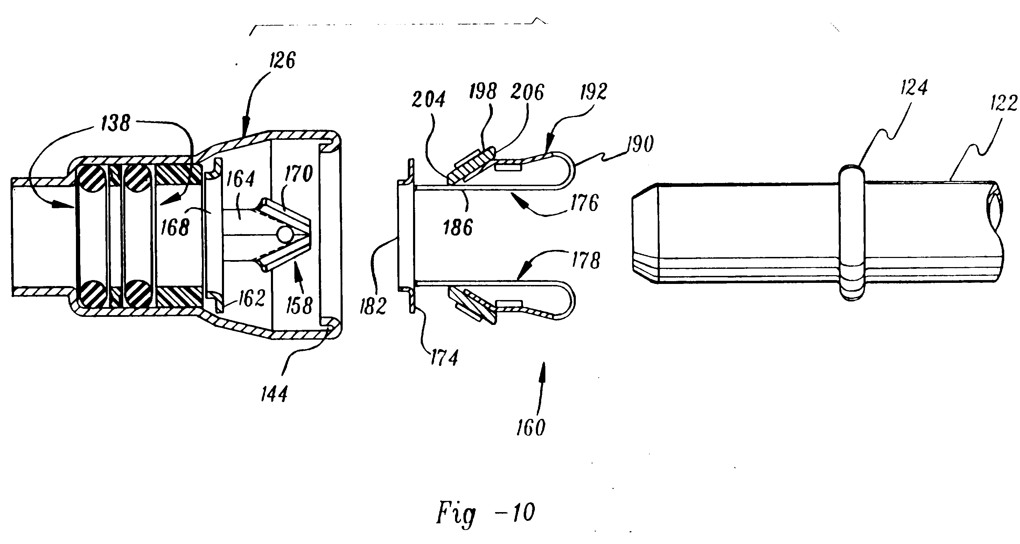

Retaining member 160 includes a ring portion 174 and a pair of arms 176 and 178. The ring portion 174 is substantially flat and planar and generally includes a radial flange 182 extending from one of its sides. The arms 176 and 178 extend substantially perpendicular from the ring 174 from its other side as seen in Figure 10. The arms 176 and 178 have substantially identical configurations and have an overall U-shape. One leg of the "U" is formed from a pair of extending strips 184 and 186. Continuous with the strips 184 and 186 are arcuate or curved web porions 188 and 190 which are also continuous with the other leg portion 192 of the U. The leg portion 192 has an overall "T" shape with its cross member 194 connecting with the curved webs 188 and 190 and its body portion 196 including a conduit securement insert 198. The body portion 196 generally includes fingers 200 and 202 which secure the conduit retaining insert 198 on the body 196.

The conduit retaining insert 198 has an overall rectangular shape with a leading edge 204 which acts as an abutting surface to abut the annular bead 124 of the conduit once the conduit is inserted into the housing 126. The insert 198 includes a trailing edge 206 which abuts the flange 144 to maintain the retainer 160 within the housing 126. The insert 198 may be manufactured from a metal, plastic or the like material to provide the desired characteristics needed by the particular conduit assembly. Also, the insert 198 could be manufactured from a heavier gage or a stronger metallic material than the retainer ring 174 and arms 176 and 178. Thus, a light weight ring and arms may be used with an insert which may be subjected to forces much greater than the material of the retainer ring 174 and arms 176 and 178.

The retainer arm 176 and 178 may have the web portions 188 and 190 extending out of the housing 126 as illustrated in Figure 8. This enables the retainer 160, via pinching together arm 176 and 178, to be removed from the housing. Thus, retainers having different inserts could be utilized in the same housing.

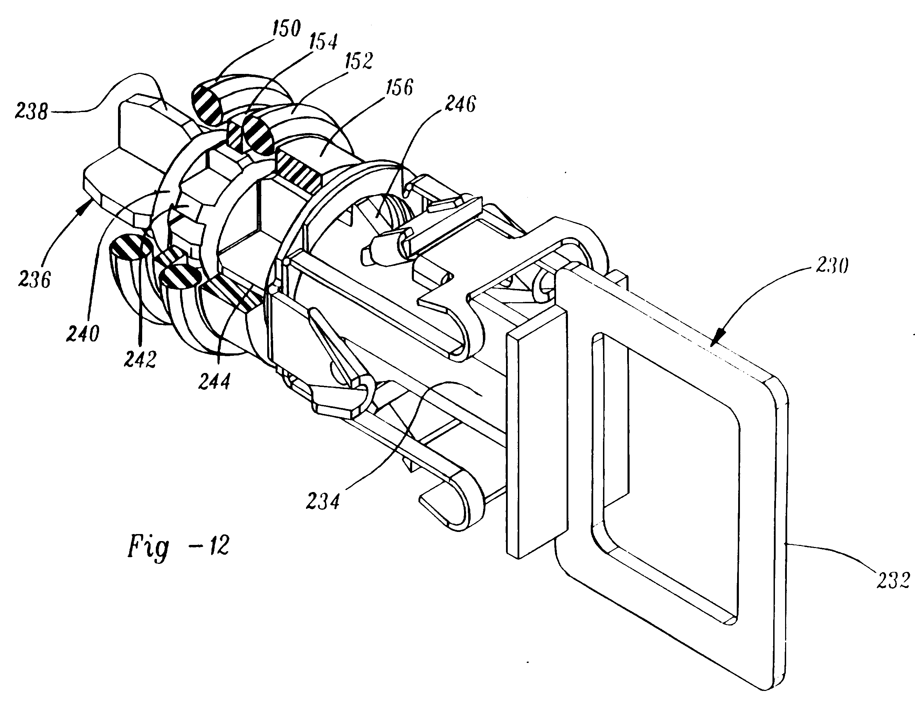

Turning to Figure 12, an apparatus is illustrated for inserting sealing means 138 and the retaining mechanism 140 into the female housing 126. The handle is generally of an open polygonal shape and the body generally has a cross shape in cross section, however, the body as well as the handle could be of any desired configuration. The body 234 has an end 236 having a plurality of seating surfaces 238, 240 and 242 for enabling positioning of the O-rings 150, 152, washer 154 and bushing 156 thereon. The body 234 also includes a pair of outward extending stops 244 which abut the ring 174 of the retainer 160. The stops 244 are positioned a desired distance from the end 236 of the body 234 to enable proper positioning of the sealing means 138 and retainer mechanism 140 into the female housing 126.

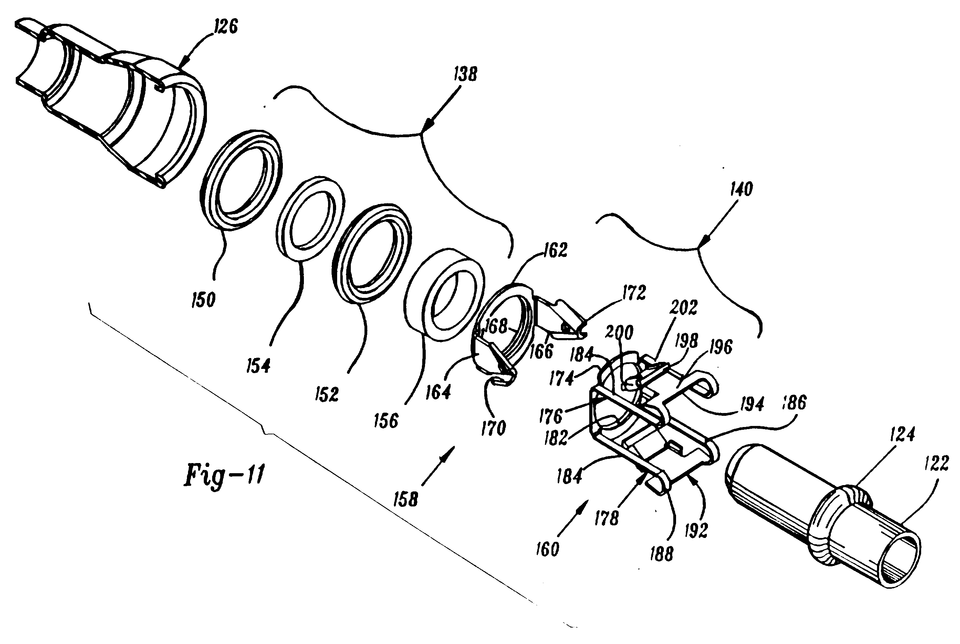

During insertion, the stops 244 are positioned in line with the inserts 198 so that the inserts abut the stops 244 to maintain the position of the apparatus 230 with respect to the retainer 140 and the sealing means 138 as seen in Figure 11. Once the apparatus 230 has been inserted into the housing 126, the apparatus 230 is rotated 90 degrees so that the stops 244 are no longer in line with the inserts 198. This being the case, the retainers 158 and 160 are locked within the housing 126, via flange 144, and apparatus 230 is withdrawn from the housing. As the apparatus 230 is withdrawn, flange rings of retainers 158 and 160 push against bushing 156, O-rings 150 and 152 and washer 154 to enable the end 236 of apparatus 230 to be withdrawn through the washer, O-rings and bushing.

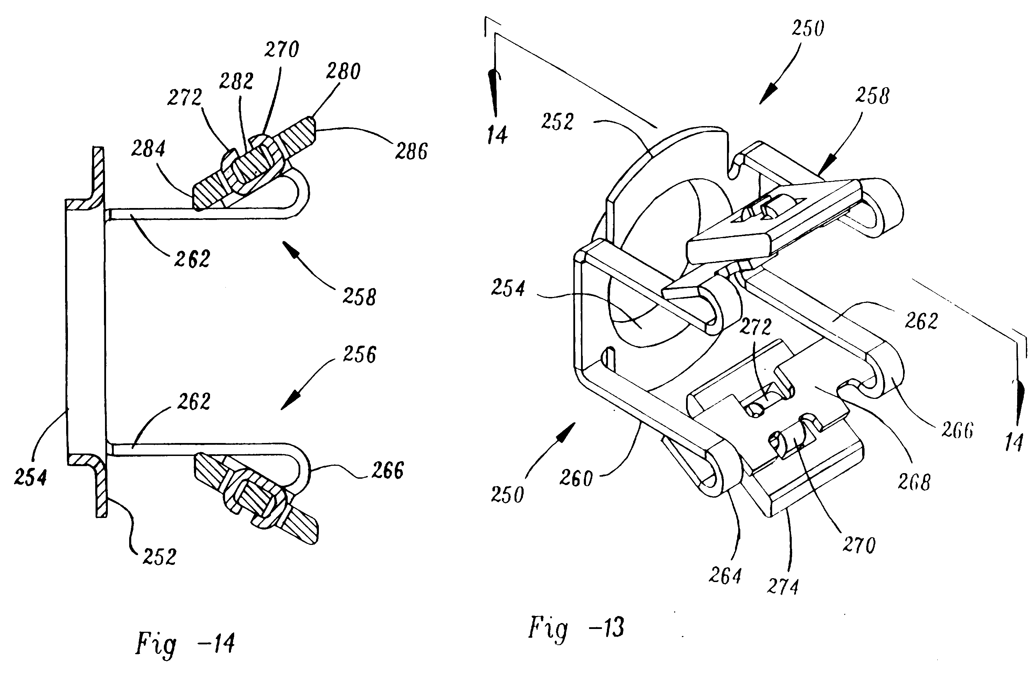

Moving to Figures 13 and 14, another embodiment of a retainer like that of retainer 160 is shown. Retainer 250 illustrated in Figures 13 and 14 is designed to be maintained within the housing 126 with its arms maintained within the housing 126.

The retainer 250 is substantially similar to retainer 160 having a ring portion 252 with flange 254 extending from one of its sides. Arms 256 and 258 extend from the other side of the ring portion 252. The arms 256 and 258 are substantially similar to arms 176 and 178 previously described. The arms 256 and 258 have an overall U-shape with a pair of elongated strips 260 and 262 forming a first leg with the strips 260 and 262 continuous with arcuate web portions 264 and 266 which, in turn, are continuous with cross member 268, which forms the second leg of the "U". The strips 260 and 262 forming one of the legs of the "U" are substantially longer than the cross member 268 forming the other leg of the "U".

Cross member 268 includes a pair of fingers 270 and 272 retaining a conduit retaining insert 280 onto the arms 256 and 258. The fingers 270 and 272 project into the middle of the insert 280 surrounding a bar 282 formed in the interior of the insert 280. The insert 280 also includes a front edge 284 and a trailing edge 286. The front edge 284 abuts the annular bead 124 of the conduit 122 to retain the conduit within the housing 126. Likewise, the trailing edge 286 abuts the flange 144 to retain the retainer 250 within the housing 126.

## Claims

1. A connector assembly for connection to a conduit (100, 122) having a radially outwardly extending annular bead (124) at a predetermined distance from an end of said conduit, comprising:
a housing (20, 126) having an axial bore formed therein for receiving said conduit (100, 122);
seal means for sealing said conduit (100, 122) with said housing (20, 126), said seal means positioned in said axial bore of said housing (20, 126); and
retainer means for retaining said conduit (100, 122) in said housing (20, 126), said retainer means positioned in said housing axial bore and including a ring (70, 174, 252) for maintaining said seal means in said housing (20, 126), said ring (70, 174, 252) including an axial bore enabling passage of said conduit (100, 122), a pair of arms (54a, 54b, 176, 178, 256, 258) extending from said ring (70, 174, 252), said arms having an overall U-shape configuration and extending longitudinally,
each arm (54a, 54b) being formed by a pair of longitudinally extending straight portions (52a, 52b; 52c, 52d) connected at one end to the ring (70, 174, 252), a depressable surface area (56, 57) connecting the other end of said straight portions (52a, 52b; 52c, 52d),
the depressible surface area (56, 57) extending towards said ring (70, 174, 252) into a retaining portion (40, 42, 43, 196, 200, 202, 268, 270, 272) in which a separate insert (30, 198, 280) is received, said inserts (30, 198, 280) being of sufficient length to engage the annular bead (124) of said conduit (100, 122) received in said housing (20, 126),
said inserts having a leading edge (32, 204, 284) for abutting said annular bead (124) to retain said conduit (100, 122) in said housing (20, 126) and a trailing edge (36, 206, 286) for abutting said housing (20, 126) to retain said retainer means in said housing (20, 126).

2. A connector assembly according to Claim 1, wherein said retainer is comprised of two retainers, namely a seal retainer (80, 158) maintaining said sealing means in said housing (20, 126), and a primary retainer (50, 160, 250) for including said conduit abutting means for maintaining said conduit (100, 122) in said housing (20, 126).

3. A connector assembly according to Claim 2, wherein said primary retainer (50, 160) being removably secured within said housing (20, 126).

4. A connector assembly according to one of Claims 2 and 3, wherein said primary retainer (50, 160, 250) includes said ring (70, 174) and said pair of arms (54a, 54b, 154, 156) extending from said ring (70, 174), said arms in longitudinal section having an overall U-shape with said one end of said arms coupled with said ring formed by a pair of straight portions (52a-d, 184, 186; 260, 262), and said other end of said arms having a T-shape with the cross member (56, 57, 194) of said T extending transverse to the extension of said straight portions (52a-d, 184, 186, 260, 262) and the middle bar of said T extending from said cross member (56, 57; 194) towards said ring (70, 174, 252) and with the end of said straight portions (52a-d, 184, 186, 260, 262) opposite to said ring (70, 174, 252) and the ends of said cross member (56, 57, 194) being joined by a pair of arcuate portions (51a-d, 188, 190, 264, 266).

5. A connector assembly according to Claim 4, wherein said T-shaped end of said arms includes said inserts.

6. A connector assembly according to on of Claims 1 to 5, wherein said inserts (30, 198, 280) have an overall rectangular shape with said first edge being a leading edge for abutting said annular bead of said conduit (100, 122) in said housing (20, 126) and said second edge being a trailing edge abutting said housing (20, 126) for retaining said primary retainer (50, 160, 250) on said housing (20, 126).

7. A connector assembly according to Claim 6, wherein said retaining inserts (30, 198, 280) are formed of a different material than said primary retainer (50, 160, 250).

8. A connector assembly according to one of Claims 2 to 7, wherein
said housing (20, 126) includes means defining a radially disposed surface (26, 144);
said primary retainer (50, 160, 250) having a diverging end portion which surrounds said retaining inserts (30, 198, 280) for preventing lateral movement of said retaining inserts (30, 198), said primary retainer (50, 160) and inserts (30, 198) being inserted into said housing (20, 126) to form a locked connection, said primary retainer (50, 160) having a depressible surface area (56, 57) upon which pressure is applied resulting in the disengagement between said inserts (30, 198) and said radially disposed surface (26, 144), said depressible surface area (56, 57) including configuration arms (54; 176, 178; 256, 258) upon which said inserts (30, 198) pivot as depressive force is applied to said surface area (56, 57), said configuration arms (54; 154, 156) providing for flexion thereby allowing for depression upon said surface area (56, 57).

9. A connector assembly according to one of Claims 6 to 8, wherein said inserts (30, 198) are enveloped by terminal portions (40, 42, 43; 196, 200, 202) of said primary retainer (50, 160), which provide for a locking mechanism to resist disconnection when inserted into said housing (20, 126).

10. A connector according to one of Claims 6 to 9, wherein said inserts (30, 198) include an edge which is adapted for pivoting.

11. A connector assembly according to one of Claims 8 to 10, wherein said inserts (30, 198) include a distal wall, which is so angled as to allow for abutment with said radially disposed surface (26, 144) of said housing (20, 126) and simultaneously compensates for the diverging terminal portion of said primary retainer (50, 160, 250).

12. A connector assembly according to one of Claims 9 to 11, wherein said terminal portions (40, 42, 43; 196, 200, 202) on each end of said primary retainer (50, 160, 250) are curved in a C-shape and contain depressions on the inner surface thereof which tightly accommodate the retaining inserts (30, 198).

13. A connector assembly according to one of Claims 6 to 12, wherein said inserts (30, 198) are made of a relatively non-deformable material and said primary retainer (50, 160, 250) is made of deformable material which will allow flexion of said configuration arms (54a, 54b, 176, 178, 256, 258) as a result of minimal pressure being applied to said depressible surface area (56, 57, 194).

14. A connector assembly according to one of Claims 2 to 13, wherein said seal retainer (80, 158) is disposed within the axial bore of said housing (20, 126), providing for a fluid tight seal between mating portions of said conduit (100, 122) and said housing (20, 126), said seal retainer (80, 158) also being disposed of an axial bore.

15. A connector assembly according to one of Claims 2 to 14, wherein said primary retainer (50, 160, 250) having a collar (70, 174), which fits snugly within said seal retainer (80, 158) to provide a fluid tight seal and from which said configuration arms (54a, 54b, 176, 178, 256, 258) project outward therefrom, said configuration arms (54a, 54b, 176, 178, 256, 258) providing for flexion at the point of projection from said collar (70, 174) as pressure is applied to the depressible surface areas (56, 57, 194) located at the opposite ends of said configuration arms (54a, 54b, 176, 178, 256, 258); as pressure is applied to the depressible surface areas (56, 57, 194), the retaining inserts (30, 198) pivot on the configuration arms (54a, 54b, 176, 178, 256, 258), providing clearance between the portion of said retaining inserts (30, 198) which engages said housing (20, 126).

16. A connector assembly according to one of Claims 1 to 15, wherein said retaining inserts (30, 198) are held in place by specially designed said terminal portions (40; 200, 202) which extend at diverging angles from the depressible surface areas (56, 57, 194).

17. A connector assembly according to Claim 15, wherein said collar (70, 174) is disposed of a circumferential outwardly extending flange portion, which inserts into said axial bore of said seal retainer (80, 158).

18. A connector assembly according to one of Claims 2 to 17, wherein said seal retainer (80, 158) disposed of outwardly extending arms (82; 164, 166), which serve to prevent lateral movement of said primary retainer (50, 160, 250).

19. A connector assembly according to one of Claims 15 to 18, wherein said collar (70, 174) is being adapted for the insertion of said conduit (100, 122) therethrough.

20. A connector assembly according to one of Claims 8 to 19, wherein said configuration arms (54a, 54b, 176, 178, 256, 258) flex to provide clearance in response to the insertion of said primary retainer (50, 160, 250) into said housing (20, 126), said configuration arms (54a, 54b, 176, 178, 256, 258) returning to an unflexed position once clearance has been accomplished between said retaining inserts (30, 198) and the radially disposed surface (26, 144) of the housing (20, 126).

21. A connector assembly according to one of Claims 8 to 20, wherein said configuration arms (54a, 54b, 176, 178, 256, 258) are of sufficient length to allow for a tight seal at said collar (70, 174) and simultaneously provide for locking connection with the radially disposed surface (26, 144) of the housing (20, 126).

22. A connector assembly according to one of Claims 2 to 21, wherein said primary retainer (50, 160, 250) is made of a deformable material so that minimal depressive force need be applied to said depressible surface area (56, 57, 194) to effectuate disengagement of the retainer assembly.

23. A connector assembly according to one of Claims 1 to 22, wherein said sealing means are O-rings (92, 138) to prevent vibration of engaged conduits (100, 122) within said housing (20, 126) and to further provide a fluid tight seal.

24. A connector assembly according to Claim 23, wherein a bushing (94, 156) is provided which is contained within said housing (20, 126) between said seal retainer (80, 158) and said O-rings (92, 138) to provide a fluid tight seal.

25. A connector assembly according to Claim 18 and 24, wherein said outwardly extending arms (82; 164, 166) of said seal retainer (80, 158) are of a sufficient length so as to abut the radially disposed surface (26, 144) of said housing (20, 126) and snap in behind said bushing (94, 156) to compress said sealing means as O-rings (92, 138) to continually provide a fluid thight seal once said primary retainer (50, 160, 250) is removed.

26. A connector assembly according to Claim 25, wherein said outwardly extending arms (82; 164, 166) have a very high collapse strength to prevent high pressure blowout of said bushing (94, 156) and said sealing means as O-rings (92, 138) once said primary retainer (50, 160, 250) is removed.

27. A connector assembly according to one of Claims 25 or 26, wherein said outwardly extending arms (82; 164, 166) extend outward from a collar (70, 174) forming a joint at which point flexion occurs when the seal retainer (80, 158) is being removed.

28. A connector assembly according to one of Claims 25 to 27, wherein said outwardly extending arms (82; 164, 166) are disposed of outwardly curved flange portions designed to effectuate easy removal of said seal retainer (80, 158).

29. A connector assembly according to one of Claims 25 to 28, wherein said outwardly extending arms ( 82; 164, 166) are provided with small holes (85) in the outwardly curved flange portions designed for allowing easy removal of the seal retainer (80, 158).

30. A connector assembly according to one of Claims 2 to 29, wherein said seal retainer (80, 158) is comprised of an outwardly extending circumferential flange portion (90, 168) which fits tightly into the bushin (94, 156) to further provide a fluid tight seal.

31. A connector assembly according to one of Claims 2 to 30, wherein said seal retainer (80, 158) and said primary retainer (50, 160, 250) are made of two different materials.

32. A connector assembly according to one of Claims 6 to 31, wherein said retaining inserts (30, 198) are made of a relatively non-deformable material and said primary retainer (50, 160, 250), said depressible surface area (56, 57, 194) and said configuration arms (54a, 54b, 176, 178, 256, 258) are made of a deformable material so that minimal depressive force need be placed upon said depressible surface area (56, 57, 194) to effectuate disengagement between said retaining inserts (30, 198) and the radially disposed surface (26, 144) of said housing (20, 126).

## Patentansprüche

1. Verbindungsanordnung zum Anschluß an eine Rohrleitung (100, 122), die eine radial nach außen weisende Ringwulst (124) in einem vorbestimmten Abstand von einem Ende der genannten Rohrleitung aufweist, umfassend
eine Gehäuse (20, 126) mit einer darin ausgebildeten axialen Bohrung zur Aufnahme der genannten Rohrleitung (100, 122);
Dichtungsmittel zum Abdichten der genannten Rohrleitung (100, 122) gegenüber dem Gehäuse (20, 126), wobei die genannten Dichtungsmittel in der genannten Bohrung des genannten Gehäuses (20, 126) angeordnet sind; und
Haltemittel zur Sicherung der genannten Rohrleitung (100, 122) im genannten Gehäuse (20, 126), wobei die genannten Haltemittel in der genannten axialen Bohrung des Gehäuses angeordnet sind und einen Ring (70, 174, 252) zum Halten der genannten Dichtungsmittel im genannten Gehäuse (20, 126) umfassen, wobei der genannte Ring (70, 174, 252) eine axiale Bohrung, die einen Durchgang für die genannte Rohrleitung (100, 122) bildet, sowie ein Paar Arme (54a, 54b, 176, 178, 256, 258) aufweist, die sich vom genannten Ring (70, 174, 252) aus erstrecken, wobei die genannten Arme insgesamt U-förmig sind und sich in Längsrichtung erstrekken,
wobei jeder Arm (54a, 54b) durch ein Paar sich in Längsrichtung erstreckender gerader Abschnitte (52a, 52b; 52c, 52d) gebildet wird, die an einem Ende mit dem Ring (70, 174, 252) verbunden sind, wobei ein niederdrückbarer Flächenbereich (56, 57) mit dem anderen Ende der genannten geraden Abschnitte (52a, 52b; 52c, 52d) verbunden ist und dieser niederdrückbare Flächenbereich (56, 57) in Richtung zum Ring (70, 174, 252) in einen Halteabschnitt (40, 42, 43, 196, 200, 202, 268, 270, 272) mündet, in dem ein einzelner Einsatz (30, 198, 280) aufgenommen ist, wobei die genannten Einsätze (30, 198, 280) eine ausreichende Länge aufweisen, um an der Ringwulst (124) der genannten Rohrleitung (100, 122) einzuschnappen, die in dem genannten Gehäuse (20, 126) aufgenommen ist,
wobei die genannten Einsätze eine Vorderkante (32, 204, 284) als Widerlager für die genannte Ringwulst (124) aufweisen, um die genannte Rohrleitung (100, 122) im genannten Gehäuse (20, 126) zu sichern und eine Hinterkante (36, 206, 286) umfassen, die als Widerlager für das genannte Gehäuse (20, 126) dient, um die genannten Haltemittel in dem genannten Gehäuse (20, 126) zu sichern.

2. Verbindungsanordnung nach Anspruch 1,
wobei die genannten Haltemittel zwei Halterungen umfassen, nämlich einen Dichtungshalter (80, 158), der ein Dichtungsmittel im genannten Gehäuse (20, 126) hält, sowie eine Haupthalterung (50, 160, 250), die die genannten Widerlagermittel für die Rohrleitung umfaßt, um die genannte Rohrleitung (100, 122) in dem genannten Gehäuse (20, 126) zu sichern.

3. Verbindungsanordnung nach Anspruch 2,
wobei die genannte Haupthalterung (50, 160) lösbar mit dem Gehäuse (20, 126) verbunden ist.

4. Verbindungsanordnung nach einem der Ansprüche 2 und 3,
wobei die genannte Haupthalterung (50, 160, 250) den genannten Ring (70, 174) umfaßt und die genannten Paare von Armen (54a, 54b, 154, 156) sich vom genannten Ring (70, 174) aus erstrecken, wobei die genannten Arme im Längsschnitt insgesamt U-förmig sind und durch ein Paar gerader Abschnitte (52a-d, 184, 186; 260, 262) gebildet werden, wobei das genannte eine Ende der genannten Arme mit dem genannten Ring verbunden ist und das genannte andere Ende der genannten Arme eine T-Form bildet, wobei sich das Querteil (56, 57, 194) der T-Form quer zum Verlauf der genannten geraden Abschnitte (52a-d, 184, 186, 260, 262) erstreckt und das Längsteil der genannten T-Form vom genannten Querteil (56, 57; 194) ausgehend sich zum genannten Ring (70, 174, 252) hin erstreckt, wobei das Ende der genannten geraden Abschnitte (52a-d, 184, 186, 260, 262) dem genannten Ring (70, 174, 252) gegenüberliegt und die Enden der genannten Querteile (56, 57, 194) mit einem Paar bogenförmiger Abschnitte (51a-d, 188, 190, 264, 266) verbunden sind.

5. Verbindungsanordnung nach Anspruch 4,
wobei das genannte T-förmige Ende der genannten Arme die genannten Einsätze umfaßt.

6. Verbindungsanordnung nach einem der Ansprüche 1 bis 5,
wobei die genannten Einsätze (30, 198, 280) insgesamt eine rechteckige Form aufweisen, wobei die erste Kante eine Vorderkante zum Anschlagen an die genannte Ringwulst der Rohrleitung (100, 122) im genannten Gehäuse (20, 126) ist und die zweite Kante eine Hinterkante ist, die dem genannten Gehäuse (20, 126) als Widerlager dient, um die genannte Haupthalterung (50, 160, 250) in dem genannten Gehäuse (20, 126) zu sichern.

7. Verbindungsanordnung nach Anspruch 6,
wobei die Halteeinsätze (20, 198, 280) aus einem anderen Werkstoff gebildet werden, als die genannte Haupthalterung (50, 160, 250).

8. Verbindungsanordnung nach einem der Ansprüche 2 bis 7, wobei
das genannte Gehäuse (20, 126) Mittel umfaßt, die eine radial angeordnete Fläche (26, 144) definieren;
die genannte Haupthalterung (50, 160, 250) einen sich verbreiternden Endabschnitt aufweist, der die genannten Halteeinsätze (30, 198, 280) umgibt, um eine seitliche Bewegung der genannten Halteeinsätze (30, 198, 280) zu verhindern, wobei die genannte Haupthalterung (50, 160) und die Einsätze (50, 160) im genannten Gehäuse (20, 126) eingesetzt sind, um eine Rastverbindung zu bilden, wobei die genannte Haupthalterung (50, 160) einen niederdrückbaren Flächenbereich (56, 57) aufweist, auf den ein Druck ausgeübt wird, der eine Entkopplung zwischen den Einsätzen (30, 198) und der genannten radial angeordneten Fläche (26, 144) bewirkt, wobei die genannte niederdrückbare Fläche (56, 57) Konfigurationsarme (54; 176, 178; 256, 258) umfaßt, um die die genannten Einsätze (30, 198) schwenken, wenn eine niederdrückende Kraft auf den genannten Flächenbereich (56, 57) ausgeübt wird, wobei die genannten Konfigurationsarme (54; 176, 178; 256, 258) eine Verformung ermöglichen, wodurch ein Niederdrücken auf den genannten Flächenbereich (56, 57) möglich wird.

9. Verbindungsanordnung nach einem der Ansprüche 6 bis 8,
wobei die genannten Einsätze (30, 198) durch Endabschnitte (40, 42, 43; 196, 200, 202) der genannten Haupthalterung (50, 160) umgeben sind, die einen Rastmechanismus bereitstellen, der nach Einbau in das genannte Gehäuse (20, 126) einem Lösen der Verbindung Widerstand entgegensetzt.

10. Verbindungsanordnung nach einem der Ansprüche 6 bis 9,
wobei die genannten Einsätze (30, 198) eine Kante umfassen, die so ausgeführt ist, daß sie ein Schwenken ermöglicht.

11. Verbindungsanordnung nach einem der Ansprüche 8 bis 10,
wobei die genannten Einsätze (30, 198) eine distale Wand umfassen, die so gewinkelt ausgeführt ist, daß sie als Widerlager für die radial angeordnete Fläche (26, 144) des genannten Gehäuses (20, 126) dienen kann und gleichzeitig den sich verbreiternden Endabschnitt der genannten Haupthalterung (50, 160, 250) ausgleicht.

12. Verbindungsanordnung nach einem der Ansprüche 9 bis 11,
wobei die genannten Endabschnitte (40, 42, 43; 196, 200, 202) an jedem Ende der genannten Haupthalterung (50, 160, 250) C-förmig gebogen sind und Vertiefungen in ihrer Innenfläche aufweisen, durch die die Halteeinsätze (30, 198) fest aufgenommen werden.

13. Verbindungsanordnung nach einem der Ansprüche 6 bis 12
wobei die genannten Einsätze (30, 198) aus einem relativ unverformbaren Werkstoff bestehen und die genannte Haupthalterung (50, 160, 250) aus einem verformbaren Werkstoff besteht, der ein Durchbiegen der genannten Konfigurationsarme (54a, 54b, 176, 178, 256, 258) erlaubt, die durch Ausübung eines minimalen Druckes auf den genannten niederdrückbaren Flächenbereich (56, 57, 194) hervorgerufen wird.

14. Verbindungsanordnung nach einem der Ansprüche 2 bis 13,
wobei der genannte Dichtungshalter (80, 158) innerhalb der axialen Bohrung des genannten Gehäuses (20, 126) angeordnet ist und eine fluidsichere Dichtung zwischen den sich ergänzenden Abschnitten der genannten Rohrleitung (100, 122) und des genannten Gehäuses (20, 126) bereitstellt, wobei der genannte Dichtungshalter (80, 158) auch über eine axiale Bohrung verfügt.

15. Verbindungsanordnung nach einem der Ansprüche 2 bis 14,
wobei die genannte Haupthalterung (50, 160, 250) einen Ring mit Manschette (70, 174) umfaßt, der sich im Paßsitz im Dichtungshalter (80, 158) anschmiegt, um eine fluidsichere Dichtung bereitzustellen und von dem sich die genannten Konfigurationsarme (54a, 54b, 176, 178, 256, 258) nach außen erstrecken, wobei die genannten Konfigurationsarme (54a, 54b, 176, 178, 256, 258), wenn Druck auf die niederdrückbaren Flächenbereiche (56, 57, 194) ausgeübt wird, die sich an den gegenüberliegenden Enden der genannten Konfigurationsarme (54a, 54b, 176, 178, 256, 258) befinden, ein Durchbiegen an der Stelle ermöglichen, an der sie aus dem genannten Ring mit Manschette (70, 174) heraustreten; wenn Druck auf die niederdrückbaren Flächenbereiche (56, 57, 194) ausgeübt wird, schwenken die Halteeinsätze (30,198) um die Konfigurationsarme (54a, 54b, 176, 178, 256, 258), wodurch der Abschnitt der Halteeinsätze (30, 198) aus der Anlage mit dem genannten Gehäuse (20, 126) durch einen Zwischenraum getrennt wird.

16. Verbindungsanordnung nach einem der Ansprüche 1 bis 15,
wobei die genannten Halteeinsätze (30, 198) durch die genannten speziell konstruierten Endabschnitte (40; 200, 202) an ihrem Platz gehalten werden, die von den niederdrückbaren Flächenbereichen (56, 57, 194) mit divergierenden Winkeln ausgehen.

17. Verbindungsanordnung nach Anspruch 15,
wobei der genannte Ring mit Manschette (70, 174) über einen nach außen weisenden Umfangsflanschabschnitt verfügt, der in die genannte Axialbohrung des genannten Dichtungshalters (80, 158) eingeschoben wird.

18. Verbindungsanordnung nach einem der Ansprüche 2 bis 17,
wobei der genannte Dichtungshalter (80, 158) über nach außen weisende Schenkel (82; 164, 166) verfügt, die eine seitliche Bewegung der Haupthalterung (50, 160, 250) verhindern.

19. Verbindungsanordnung nach einem der Ansprüche 15 bis 18,
wobei der genannte Ring mit Manschette (70, 174) so ausgeführt ist, daß die Rohrleitung (100, 122) durch ihn hindurchgesteckt werden kann.

20. Verbindungsanordnung nach einem der Ansprüche 8 und 19,
wobei die genannten Konfigurationsarme (54a, 54b, 176, 178, 256, 258) sich verbiegen, um einen Zwischenraum als Reaktion auf die Einführung der genannten Haupthalterung (50, 160, 250) in das genannte Gehäuse (20, 126) zu schaffen, wobei die genannten Konfigurationsarme (54a, 54b, 176, 178, 256, 258) in eine unverbogene Position zurückkehren, sobald ein Zwischenraum zwischen den genannten Halteeinsätzen (30, 198) und der radial angeordneten Fläche (26, 144) des Gehäuses geschaffen wurde.

21. Verbindungsanordnung nach einem der Ansprüche 8 bis 20,
wobei die genannten Konfigurationsarme (54a, 54b, 176, 178, 256, 258) eine ausreichende Länge aufweisen, um eine feste Abdichtung an dem genannten Ring mit Manschette (70, 174) zu ermöglichen und gleichzeitig für eine Rastverbindung mit der radial angeordneten Fläche (26, 144) des Gehäuses (20, 126) sorgen.

22. Verbindungsanordnung nach einem der Ansprüche 2 bis 21,
wobei die genannte Haupthalterung (50, 160, 250) aus einem verformbaren Werkstoff hergestellt ist, so daß nur eine minimale niederdrückende Kraft auf den genannten niederdrückbaren Flächenbereich (56, 57, 194) ausgeübt zu werden braucht, um ein Lösen der Halterungsanordnung zu erreichen.

23. Verbindungsanordnung nach einem der Ansprüche 1 bis 22,
wobei die genannten Dichtungsmittel O-Ringe (92, 138) umfassen, um Vibrationen der eingerasteten Rohrleitungen (100, 122) innerhalb des genannten Gehäuses (20, 126) zu verhindern und weiterhin, um eine fluidsichere Dichtung bereitzustellen.

24. Verbindungsanordnung nach Anspruch 23,
wobei eine Hülse (94, 156) vorgesehen ist, die in dem genannten Gehäuse (20, 126) zwischen dem genannten Dichtungshalter (80, 158) und den genannten O-Ringen (92, 138) vorgesehen ist, um eine fluidsichere Dichtung bereitzustellen.

25. Verbindungsanordnung nach Anspruch 18 und 24,
wobei die genannten nach außen weisenden Schenkel (82; 164, 166) des genannten Dichtungshalters (80, 158) über eine ausreichende Länge verfügen, um an der radial angeordneten Fläche (26, 144) des genannten Gehäuses (20, 126) anzuschlagen und hinter der genannten Muffe (94, 156) einzurasten, wenn die genannte Haupthalterung (50, 160, 250) entfernt ist, wodurch die genannten Dichtungsmittel in Form von O-Ringen (92, 138) zusammengedrückt werden, um eine kontinuierliche fluidsichere Dichtung zu gewährleisten.

26. Verbindungsanordnung nach Anspruch 25,
wobei die genannten sich nach außen erstreckenden Schenkel (82, 164, 166) eine sehr hohe Knickfestigkeit aufweisen, um ein Ausblasen der genannten Muffe (94, 156) und der genannten Dichtungsmittel in Form von O-Ringen bei hohem Druck zu verhindern, wenn die Haupthalterung (50, 60, 250) entfernt ist.

27. Verbindungsanordnung nach einem der Ansprüche 25 oder 26,
wobei die genannten sich nach außen erstreckenden Schenkel (82; 164, 166) sich von einem Ring mit Manschette (70, 174) aus nach außen erstrecken und dabei ein Gelenk bilden, an dem eine Beugung auftritt, wenn der Dichtungshalter (80, 158) entfernt wird.

28. Verbindungsanordnung nach einem der Ansprüche 25 bis 27,
wobei die genannten sich nach außen erstreckenden Schenkel (82; 164, 166) über nach außen gebogene Flanschabschnitte verfügen, die ein leichtes Entfernen des genannten Dichtungshalters (80, 158) bewirken.

29. Verbindungsanordnung nach einem der Ansprüche 25 bis 28,
wobei die genannten sich nach außen erstreckenden Schenkel (82; 164, 166) mit kleinen Löchern (85) in den nach außen gebogenen Flanschabschnitten versehen sind, die ein leichtes Entfernen des Dichtungshalters (80, 158) ermöglichen.

30. Verbindungsanordnung nach einem der Ansprüche 2 bis 29,
wobei der genannte Dichtungshalter (80, 158) einen sich nach außen erstreckenden Umfangsflanschabschnitt (90, 168) umfaßt, der im Festsitz in der Muffe (94, 156) einsitzt, um eine fluidsichere Dichtung zu gewährleisten.

31. Verbindungsanordnung nach einem der Ansprüche 2 bis 30,
wobei der genannte Dichtungshalter (80, 158) und die genannte Haupthalterung (50, 160, 250) aus zwei verschiedenen Werkstoffen bestehen.

32. Verbindungsanordnung nach einem der Ansprüche 6 bis 31,
wobei die genannten Halteeinsätze (30, 198) aus einem relativ unverformbaren Werkstoff bestehen und die genannte Haupthalterung (50, 160, 250), der genannte niederdrückbare Flächenbereich (56, 57, 194) und die genannten Konfigurationsarme (54a, 54b, 176, 178, 256, 258) aus einem verformbaren Werkstoff hergestellt sind, so daß nur eine minimale niederdrückende Kraft auf den genannten niederdrückbaren Flächenbereich (56, 57, 194) ausgeübt zu werden braucht, um eine Entkopplung zwischen den Halteeinsätzen (30, 198) und der radial angeordneten Fläche (26, 144) des genannten Gehäuses (20, 126) herbeizuführen.

## Revendications

1. Ensemble à raccord destiné au raccordement à un conduit (100, 122) ayant un cordon annulaire (124) dépassant radialement à l'extérieur à une distance prédéterminée d'une extrémité du conduit, l'ensemble comprenant :
un boîtier (20, 126) ayant un trou axial formé pour le logement du conduit (100, 122),
un dispositif d'étanchéité destiné à assurer la coopération étanche du conduit (100, 122) et du boîtier (20, 126) et positionné dans le trou axial du boîtier (20, 126), et
un dispositif de retenue du conduit (100, 122) dans le boîtier (20, 126), le dispositif de retenue étant placé dans le trou axial du boîtier et comportant un anneau (70, 174, 252) destiné à maintenir le dispositif d'étanchéité dans le boîtier (20, 126), l'anneau (70, 174, 252) ayant un trou axial permettant le passage du conduit (100, 122), deux bras (54a, 54b, 176, 178, 256, 258) dépassant de l'anneau (70, 174, 252), les bras ayant une configuration générale en U et étant disposés longitudinalement,
chaque bras (54a, 54b) étant formé par une paire de parties rectilignes longitudinales (52a, 52b ; 52c, 52d) raccordées à une première extrémité à l'anneau (70, 174, 252), une région de surface (56, 57) qui peut être enfoncée et raccordant l'autre extrémité des parties rectilignes (52a, 52b ; 52c, 52d),
la région de surface qui peut être enfoncée (56, 57) étant tournée vers l'anneau (70, 174, 252) dans une partie de retenue (40, 42, 43, 196, 200, 202, 268, 270, 272) dans laquelle un élément rapporté séparé (30, 198, 280) est logé, les éléments rapportés (30, 198, 280) ayant une longueur suffisante pour coopérer avec le cordon annulaire (124) du conduit (100, 122) logé dans le boîtier (20, 126), et
les éléments rapportés ayant un bord avant (32, 204, 284) destiné à être en butée contre le cordon annulaire (124) afin que le conduit (100, 122) soit retenu dans le boîtier (20, 126) et un bord arrière (36, 206, 286) destiné à être en butée contre le boîtier (20, 126) afin que le dispositif de retenue soit retenu dans le boîtier (20, 126).

2. Ensemble à raccord selon la revendication 1, dans lequel l'organe de retenue est formé de deux organes de retenue, c'est-à-dire un organe (80, 158) de retenue de joint d'étanchéité qui maintient le dispositif d'étanchéité dans le boîtier (20, 126), et un organe primaire (50, 160, 250) de retenue destiné à comprendre le dispositif de butée de conduit destiné à maintenir le conduit (100, 122) dans le boîtier (20, 126).

3. Ensemble à raccord selon la revendication 2, dans lequel l'organe primaire (50, 160) de retenue est fixé temporairement dans le boîtier (20, 126).

4. Ensemble à raccord selon l'une des revendications 2 et 3, dans lequel l'organe primaire (50, 160, 250) de retenue comprend l'anneau (70, 174) et la paire de bras (54a, 54b, 154, 156) dépassant de l'anneau (70, 174), les bras ayant, en coupe longitudinale, une forme générale en U avec la première extrémité des bras couplés à l'anneau formée par deux parties rectilignes (52a-52d, 184, 186 ; 260, 262), l'autre extrémité des bras ayant une forme en T dont la barre (56, 57, 194) est transversale à la longueur des parties rectilignes (52a-52d, 184, 186, 260, 262), la tige du T dépassant de la barre transversale (56, 57 ; 194) vers l'anneau (70, 174, 252), l'extrémité des parties rectilignes (52a-52d, 184, 186, 260, 262) opposée à l'anneau (70, 174, 252) et les extrémités de l'organe transversal (56, 57, 194) étant raccordées par une paire de parties courbes (51a-51d, 188, 190, 264, 266).

5. Ensemble à raccord selon la revendication 4, dans lequel l'extrémité des bras à une forme en T comprend les éléments rapportés.

6. Ensemble à raccord selon l'une des revendications 1 à 5, dans lequel les éléments raccordés (30, 198, 280) ont une forme générale rectangulaire, le premier bord étant un bord avant destiné à être en butée contre le cordon annulaire du conduit (100, 122) dans le boîtier (20, 126) et le second bord étant un bord arrière en butée contre le boîtier (20, 126) afin qu'il retienne l'organe primaire (50, 160, 250) de retenue sur le boîtier (20, 126).

7. Ensemble à raccord selon la revendication 6, dans lequel les éléments rapportés (30, 198, 280) de retenue sont formés d'un matériau différent de celui de l'organe primaire (50, 160, 250) de retenue.

8. Ensemble à raccord selon l'une des revendications 2 à 7, dans lequel
le boîtier (20, 126) comporte un dispositif délimitant une surface placée radialement (26, 144),
l'organe primaire (50, 160, 250) de retenue ayant une partie divergente d'extrémité qui entoure les éléments rapportés (30, 198, 280) de retenue afin qu'il empêche le déplacement latéral des éléments rapportés (30, 198) de retenue, l'organe primaire (50, 160) de retenue et les éléments rapportés (30, 198) étant insérés dans le boîtier (20, 126) afin qu'ils forment un raccord bloqué, l'organe primaire (50, 160) de retenue ayant une région de surface (56, 57) qui peut être enfoncée lorsqu'une pression est appliquée et provoque la séparation des éléments rapportés (30, 198) et de la surface disposée radialement (26, 144), la région de surface (56, 57) qui peut être enfoncée ayant des bras (54 ; 176, 178 ; 256, 258) de configuration sur lesquels pivotent les éléments rapportés (30, 198) lorsqu'une force d'enfoncement est appliquée à la région de la surface (56, 57), les bras de configuration (54 ; 176, 178 ; 256, 258) assurant une flexion qui permet l'enfoncement de la région de surface (56, 57).

9. Ensemble à raccord selon l'une des revendications 6 à 8, dans lequel les éléments rapportés (30, 198) sont enveloppés par des parties terminales (40, 42, 43 ; 196, 200, 202) de l'organe primaire (50, 160) de retenue, avec formation d'un mécanisme de blocage qui résiste à la séparation après insertion dans le boîtier (20, 126).

10. Raccord selon l'une des revendications 6 à 9, dans lequel les éléments rapportés (30, 198) ont un bord destiné à pivoter.

11. Ensemble à raccord selon l'une des revendications 8 à 10, dans lequel les éléments rapportés (30, 198) comportent une paroi externe inclinée de manière qu'elle permette le contact par butée avec la surface disposée radialement (26, 144) du boîtier (20, 126) et compense simultanément la position de la partie terminale divergente de l'organe primaire (50, 160, 250) de retenue.

12. Ensemble à raccord selon l'une des revendications 9 à 11, dans lequel les parties terminales (40, 42, 43 196, 200, 202) de chaque extrémité de l'organe primaire (50, 160, 220) de retenue ont une courbure en C et comportent des évidements de la surface interne permettant un logement intime des éléments rapportés (30, 198) de retenue.

13. Ensemble à raccord selon l'une des revendications 6 à 12, dans lequel les éléments rapportés (30, 198) sont formés d'un matériau relativement indéformable et l'organe primaire (50, 160, 250) de retenue est formé d'un matériau déformable qui permet une flexion des bras de configuration (54a, 54b, 176, 178, 256, 258) sous l'action d'une pression minimale appliquée à la région de surface (56, 57, 194) qui peut être enfoncée.

14. Ensemble à raccord selon l'une des revendications 2 à 13, dans lequel l'organe (80, 158) de retenue de joint d'étanchéité est placé dans un trou axial du boîtier (20, 126) et forme un joint étanche aux fluides entre les parties complémentaires du conduit (100, 122) et du boîtier (20, 126), l'organe (80, 158) de retenue de joint d'étanchéité étant aussi placé dans un trou axial.

15. Ensemble à raccord selon l'une des revendications 2 à 14, dans lequel l'organe primaire (50, 160, 250) de retenue a un collier (70, 174) qui s'ajuste intimement dans l'organe (80, 158) de retenue de joint d'étanchéité en formant un joint étanche aux fluides et à partir duquel les bras de configuration (54a, 54b, 176, 178, 256, 258) dépassent vers l'extérieur, les bras de configuration (54a, 54b, 176, 178, 256, 258) assurant la friction en un point de saillie du collier (70, 174) lorsqu'une pression est appliquée aux régions (56, 57, 194) de surface qui peuvent être enfoncées et qui sont placées aux extrémités opposées des bras de configuration (54a, 54b, 176, 178, 256, 258) ; lorsqu'une pression est appliquée aux régions de surface (56, 57, 194) qui peuvent être enfoncées, les éléments rapportés (30, 198) de retenue pivotent sur les bras de configuration (54a, 54b, 176, 178, 256, 258) en laissant un espace entre les parties des éléments rapportés (30, 198) de retenue qui sont au contact du boîtier (20, 126).

16. Ensemble à raccord selon l'une des revendications 1 à 15, dans lequel les éléments rapportés (30, 198) de retenue sont maintenus en place par les parties terminales (40 ; 200, 202) de réalisation spéciale qui dépassent en formant des angles divergents à partir des régions de surface (56, 57, 194) qui peuvent être enfoncées.

17. Ensemble à raccord selon la revendication 15, dans lequel le collier (70, 174) est formé d'une partie circonférentielle de flasque dépassant vers l'extérieur qui pénètre dans le trou axial de l'organe (80, 158) de retenue de joint d'étanchéité.

18. Ensemble à raccord selon l'une des revendications 2 à 17, dans lequel l'organe (80, 158) de retenue de joint d'étanchéité est formé de bras dépassant vers l'extérieur (82 ; 164, 166) qui sont destinés à empêcher un déplacement latéral de l'organe primaire (50, 160, 250) de retenue.

19. Ensemble à raccord selon l'une des revendications 15 à 18, dans lequel le collier (70, 174) est destiné à permettre l'introduction du conduit (100, 122).

20. Ensemble à raccord selon l'une des revendications 8 à 19, dans lequel les bras de configuration (54a, 54b, 176, 178, 256, 258) fléchissent afin qu'ils laissent un espace à la suite de l'insertion de l'organe primaire (50, 160, 250) de retenue dans le boîtier (20, 126), les bras de configuration (54a, 54b, 176, 178, 256, 258) revenant vers une position qui n'a pas fléchi lorsqu'un espace a été formé entre les éléments rapportés (30, 198) de retenue et la surface disposée radialement (26, 144) du boîtier (20, 126).

21. Ensemble à raccord selon l'une des revendications 8 à 20, dans lequel les bras de configuration (54a, 54b, 176, 178, 256, 258) ont une longueur suffisante pour permettre la formation d'un joint étanche au niveau du collier (70, 174) et pour former simultanément un raccord bloqué avec la surface disposée radialement (26, 144) du boîtier (20, 126).

22. Ensemble à raccord selon l'une des revendications 2 à 21, dans lequel l'organe primaire (50, 160, 250) de retenue est formé d'un matériau déformable afin qu'qu'il soit nécessaire qu'une force minimale d'enfoncement soit appliquée à la région de surface (56, 57, 194) qui peut être enfoncée pour assurer la séparation de l'ensemble à organe de retenue.

23. Ensemble à raccord selon l'une des revendications 1 à 22, dans lequel le dispositif d'étanchéité est formé de joints toriques (92, 138) destinés à empêcher la vibration des conduits (120, 122) qui sont raccordés dans le boîtier (20, 126) tout en assurant la formation d'un joint étanche aux fluides.

24. Ensemble à raccord selon la revendication 23, dans lequel un manchon (94, 156) est incorporé au boîtier (20, 126) entre l'organe (80, 158) de retenue de joint d'étanchéité et les joints toriques (92, 138) afin qu'il forme un joint étanche aux fluides.

25. Ensemble à raccord selon les revendications 18 et 24, dans lequel les bras dépassant vers l'extérieur (82 ; 164, 166) de l'organe (80, 158) de retenue de joint d'étanchéité ont une longueur suffisante pour être en butée contre la surface disposée radialement (26, 144) du boîtier (20, 126) et pour s'enclencher derrière le manchon (94, 156) en comprimant le dispositif d'étanchéité sous forme des joints toriques (92, 138) et en assurant constamment la formation d'un joint étanche aux fluides lorsque l'organe primaire (50, 160, 250) de retenue est retiré.

26. Ensemble à raccord selon la revendication 25, dans lequel les bras (82 ; 164, 166) qui dépassent vers l'extérieur ont une résistance très élevée à l'affaissement afin que le manchon (94, 156) et le dispositif d'étanchéité sous forme des joints toriques (92, 138) ne puissent pas être chassés par une pression élevée lorsque l'organe primaire (50, 160, 250) de retenue est retiré.

27. Ensemble à raccord selon l'une des revendications 25 et 26, dans lequel les bras (82 ; 164, 166) qui dépassent vers l'extérieur dépassent vers l'extérieur d'un collier (70, 174) formant un joint auquel se produit une flexion ponctuelle lorsque l'organe (80, 158) de retenue de joint d'étanchéité est retiré.

28. Ensemble à raccord selon l'une des revendications 25 à 27, dans lequel les bras (82 ; 164, 166) qui dépassent vers l'extérieur sont placés sur des parties de flasque courbées vers l'extérieur destinées à permettre une extraction facile de l'organe (80, 158) de retenue de joint d'étanchéité.

29. Ensemble à raccord selon l'une des revendications 25 à 28, dans lequel les bras (82 ; 164, 166) qui dépassent vers l'extérieur ont des petits trous (85) formés dans les parties de flasque courbées vers l'extérieur et destinées à permettre une extraction facile de l'organe (80, 158) de retenue de joint d'étanchéité.

30. Ensemble à raccord selon l'une des revendications 2 à 29, dans lequel l'organe (80, 158) de retenue de joint d'étanchéité comprend une partie (90, 168) de flasque circonférentielle dépassant vers l'extérieur qui est ajustée intimement dans le manchon (94, 156) pour la formation d'un joint étanche aux fluides.

31. Ensemble à raccord selon l'une des revendications 2 à 30, dans lequel l'organe (80, 158) de retenue de joint d'étanchéité et l'organe primaire (50, 160, 250) de retenue sont formés de deux matériaux différents.

32. Ensemble à raccord selon l'une des revendications 6 à 31, dans lequel les éléments rapportés (30, 198) de retenue sont formés d'un matériau relativement indéformable et l'organe primaire (50, 160, 250) de retenue, la région de surface (56, 57, 194) qui peut être enfoncée et les bras de configuration (54a, 54b, 176, 178, 256, 258) sont formés d'un matériau déformable afin qu'il soit nécessaire qu'une force minimale d'enfoncement soit appliquée à la région de surface (56, 57, 194) qui peut être enfoncée pour assurer la séparation des éléments rapportés (30, 198) de retenue et de la surface disposée radialement (26, 244) du boîtier (20, 126).
